# EUROPÄISCHE PATENTANMELDUNG

(11) **EP 1 052 149 A2**
(43) Veröffentlichungstag der Anmeldung: **15.11.2000**
(21) Anmeldenummer: 00109483.8
(22) Anmeldetag: 04.05.2000
(51) Int. Cl.: B60R 16/02

(54) **Verfahren zum Betrieb einer Sicherheitseinrichtung für Kraftfahrzeuge**

(30) Priorität: 14.05.1999 DE 19922331
(71) Anmelder: DaimlerChrysler AG, 70567 Stuttgart (DE)
(72) Erfinder: Mäckel, Rainer, Dr., 53639 Königswinter (DE); Schulz, Thomas, 72669 Unterensingen (DE)

(57) **Zusammenfassung**

Ein Verfahren zum Betrieb einer einen mehrstufigen Hochstrom-Batterietrennschalter enthaltenden Sicherheitseinrichtung (11) für Kraftfahrzeuge, wobei eine Abtrennung der Batterie (10) vom Bordnetz durch Fahrzeugbetriebssignale gesperrt wird, ist dadurch gekennzeichnet, daß zur Wiederinbetriebnahme des Fahrzeugs Türkontaktschalter betätigt werden und einer, den Batterietrennschalter (16) motorisch betätigenden Schaltlogik (17) Batteriestrom zuführen, derart, daß diese den Batterietrennschalter (14) in eine das Bordnetz mit der Batterie verbindende Standardposition überführt.

## Beschreibung

Die Erfindung betrifft ein Verfahren zum Betrieb einer Sicherheitseinrichtung für Kraftfahrzeuge nach dem Oberbegriff des Anspruchs 1.

Eine bekannte Sicherheitsschaltung dieser Art in Form einer Trennschalteinrichtung für Kraftfahrzeuge geht aus der DE 33 27 532 A1 hervor. Sie spricht primär auf elektrische Befehle eines Notbefehlsgebers an, ist also fernbedient zu schalten und ermöglicht eine Trennung der Batterie vom Bordnetz; allerdings nicht nur in Notfällen, sondern auch dann, wenn das Fahrzeug abgestellt wird. Eine solche Standausschaltung wird aufgrund einer Verhinderungsschaltung nur bei stillstehendem Motor zugelassen oder wenn keine sonstigen Stromverbraucher im Kraftfahrzeug eingeschaltet sind. Problematisch ist hierbei allerdings, daß die Steuerschaltung auch bei erfolgter Bordnetzabtrennung weiterhin zur Aufrechterhaltung ihrer Betriebsbereitschaft mit der Batterie verbunden bleibt und Strom verbraucht, also für einen längeren Fahrzeugstillstand oder Überseetransport nicht eingesetzt werden kann. Die Abschaltung der Batterie vom Bordnetz erfolgt schließlich über selbsthaltende Relais, die bei den hier auftretenden sehr hohen Strömen möglicherweise Kontaktprobleme bekommen oder zum Kontaktkleben neigen.

Bei modernen Kraftfahrzeugen nimmt die Anzahl elektrischer Steuergeräte entsprechend der Anzahl von an einem Bordnetz hängender Verbraucher immer mehr zu, so daß zur Erhöhung der Betriebssicherheit die Steuergeräte üblicherweise mit einem fahrzeuginternen Bussystem vernetzt sind und in einer Art Ringleitung von einer zentralen Steuereinrichtung digitale Schaltsignale empfangen, die mittels Mikroprozessoren in den Steuergeräten entschlüsselt und in entsprechende Befehle an die unmittelbar benachbarten Empfänger umgesetzt werden.

Solche Datenbus-Systeme im Kraftfahrzeug orientieren sich üblicherweise am sogenannten CAN-Standard (Controller Area Network). In der Regel gehen daher die Steuergeräte bzw. die in diesen angeordneten Mikroprozessoren nach Abschalten des Fahrzeugs nach einer von der Art des Steuergeräts abhängigen Verzögerungszeit in einen Ruhe- oder Schlafmodus über. In diesem Zustand ist der Ruhestromverbrauch der Steuergeräte relativ gering, kann sich in der Summe aber doch auf einen eine Fahrzeugbatterie permanent belastenden Strom von einigen 100 mA belaufen, insbesondere wenn noch eine scharf geschaltete Überwachungsanlage hinzu kommt.

Steht ein solches Fahrzeug dann längere Zeit, ohne daß die Batterie durch den Generator bei laufendem Motor geladen werden kann, beispielsweise bei einer längeren Abwesenheit des Fahrzeughalters, beim Überwintern des Fahrzeugs oder bei einem längeren Transport auf Schiffen nach Übersee, dann kommt es in Verbindung mit der sich stets ergebenden, nicht zu vermeidenden Selbstentladung der Batterie zu einer so starken Entladung, daß unter Umständen sogar die Fahrzeugbatterie unheilbar beschädigt wird, jedenfalls eine Startfähigkeit des Fahrzeugs nicht mehr vorliegt.

Eine solche Tiefentladung von Batterien führt auch deshalb zu einer nachhaltigen Schädigung, weil im Normalbetrieb die durch die elektrische Ladung an den Elektroden erzeugte elektrische Spannung diese gegen die Aggressivität der Schwefelsäure schützt. Bricht diese Spannung aufgrund einer Tiefentladung zusammen, so entfällt der Schutz der Elektroden, und es kommt zu Zersetzungserscheinungen, die schon nach kurzer Zeit die Elektroden unumkehrbar so stark schädigen, daß aufgrund der drastischen Zerstörung der Speicherkapazität die Speicherfunktion der Batterie verloren geht.

Ein Fahrzeug mit einer stark entladenen Batterie wird häufig durch Fremdstart wieder in Betrieb genommen, also angelassen, und zwar indem eine zweite Batterie, die in der Regel von einem Fremdfahrzeug stammt, parallel zu der entladenen Fahrzeugbatterie geschaltet wird. Nicht selten kommt es hierbei allerdings, insbesondere nachts, zu einer Verwechslung der Pole, wodurch nicht nur die ohnehin stark geschwächte Fahrzeugbatterie, sondern auch die elektrischen Einrichtungen und Steuergeräte im Fahrzeug, also die gesamte Fahrzeugelektrik einschließlich Generator und Generatordioden sowie die Elektronik nachhaltig Schaden nehmen können.
Ist die fahrzeugeigene, insofern erste Batterie sehr tief entladen, kann ein Fremdstartversuch auch fehlschlagen, da die Bordnetzspannung durch den hohen Strom, die der Starter und im übrigen auch die tiefentladene erste Batterie während der Startzeit benötigen, unter einen Grenzwert von beispielsweise 5 Volt absinken kann und somit die für den Start wichtigen Steuergeräte nicht mehr mit einer ausreichenden Spannung versorgt werden.

Ferner kommt es bei Fahrzeugunfällen gelegentlich dazu, daß elektrische Leitungen, aber auch Geräte vor allem bei einem Unfall in erster Linie im Motorraum (crashgefährdeter Bereich) beschädigt werden, was zu einem Funkenüberschlag bzw. einem Lichtbogen im Kurzschlußfall führen kann. Hierdurch kann es bei gleichzeitigem Austritt von Kraftstoff, etwa aus beschädigten Leitungen, zu Bränden kommen.

Problematisch ist daher bei Kraftfahrzeug-Bordnetzen der (automatische) Schutz der eingebauten Fahrzeugbatterie vor Tiefentladung, wie sie beispielsweise bei Überseetransport, bei längerem Stillstand des Fahrzeugs, bei zu starker Belastung und damit entsprechender Entladung auftreten kann, der Schutz des Bordnetzes und seiner Komponenten vor Verpolung, das Abtrennen mindestens von crash-gefährdeten elektrischen Fahrzeugkomponenten und Leitungen bei einem möglichen Unfall sowie schließlich die Notwendigkeit, die Grundeinstellung im Falle einer erfolgten Trennung zwischen Bordnetz und Batterie wieder herzustellen, d.h. das Fahrzeug wieder in einen Normalzustand zu bringen.

Bekannt ist es, einen Schutz der Batterie gegen Tiefentladung beim Überseetransport derzeit dadurch zu gewährleisten, daß die Batterie mit Hilfe eines Trennschalters nach Verladung des Fahrzeugs auf dem Schiff manuell vom Bordnetz getrennt wird. Beim Entladen, um also das Fahrzeug von Bord fahren zu können, wird der Trennschalter wieder geschlossen und vor der endgültigen Inbetriebnahme beim jeweiligen Händler schließlich entfernt.

Besonders schwerwiegend ist das erwähnte Problem einer Falschpolung bei Fremdstarthilfe, da eine Beseitigung des Schadens nur durch Austausch der nicht hinreichend geschützten, durch die Falschpolung unrettbar zerstörten Elektrik- und Elektronikkomponenten bei entsprechend hohen Kosten möglich ist.

Die folgenden Veröffentlichungen beziehen sich auf bekannte Batterietrennschalter bzw. auf die Möglichkeit, unter bestimmten Umständen eine Batterie von ihren Verbrauchern abzutrennen, wenn deren Tiefentladung droht:
DE 34 02 372 A1, DE 42 11 578 C1, DE 33 03 185 A1, DE-AS 1 086 322.

So werden bei der DE 34 02 372 A1 zwei leitende, einander koaxial gegenüberliegende Elektroden durch ein zwischen ihnen liegendes Isolatorstück getrennt, das jedoch im Normalfall von einer elektrisch leitenden Schaltbrücke überbrückt ist. Die Schaltbrücke läßt sich durch eine Axialverschiebung einer Hülse öffnen.

Aus der DE 42 11 578 C1 geht eine Batterietrennvorrichtung für Kraftfahrzeuge mit einem Batterietrennschalter hervor, der vom Batterieraum manuell und vom Fahrersitz aus mit einem Sicherheits-Hauptschalter ferngesteuert betätigbar ist. Vor einer möglichen Öffnung des Batterietrennschalters müssen zunächst alle zündschloßgeschalteten Verbraucher abgeschaltet und eine Motorabschaltung eingeleitet werden.

Ein weiterer aus der DE 33 03 185 A1 bekannter Batterietrennschalter verfügt zum einen über einen Handgriff zum willkürlichen manuellen Ein- und Ausschalten mittels in einer Hülse angeordneten Nockenlaufbahnen, zum anderen läßt sich eine Betätigung im Ausschaltsinn auch durch eine andere Kraftquelle, beispielsweise eine Sprengpatrone anstoßen, die durch einen Impuls in Abhängigkeit vom Ansprechen eines Feuerdetektors auslösbar ist.

Ferner sind Verpolschutzeinrichtungen, etwa bei Batterieladegeräten oder beim Anschluß von Batterien an Bordnetze von Kraftfahrzeugen aus der DE 42 31 970 C2 oder der DE 196 03 117 A1 bekannt.

Die bekannten Verpolschutzanordnungen für ein Batterieladesystem und/oder ein Bordnetz für Kraftfahrzeuge beruhen üblicherweise darauf, daß eine Sensorschaltung vorgesehen ist, die die Polarität der anzuschließenden Batterie erfaßt und eine Verbindung zu einem Ladegerät bzw. zum Bordnetz erst dann, beispielsweise durch das Schließen eines Schalters zuläßt, wenn die Polung ordnungsgemäß ist.

Die Verpolschutzschaltung für ein Batterieladegerät entsprechend der DE 42 31 920 C2 arbeitet so, daß von einem die Verpolung erfassenden Mikroprozessor dem Anschlußpunkt für den Pluspol der zu ladenden Batterie über einen Spannungsteiler selbst eine positive Spannung zugeführt wird, im Falle daß der Mikroprozessor an einem ersten Erkennungseingang eine ordnungsgemäße Polung nicht sicher erkennen kann. Tatsächlich ergibt sich bei einer Falschpolung über diesen Spannungsteiler dann eine so stark in Richtung auf negative Werte verlagerte, vom Mikroprozessor auszuwertende Meßspannung am Spannungsteiler, daß für den Verpolungsfall eine korrekte Verpolungsmeldung ausgegeben und entsprechende Maßnahmen getroffen, beispielsweise Umpolung der Anschlüsse vorgenommen werden können.

Bei der Verpolschutzschaltung entsprechend DE 196 03 117 A1 sind MOSFET-Transistoren vorgesehen, durch welche der durch die Schutzschaltung hervorgerufene Spannungsabfall wesentlich verringert wird, so daß der Einsatz der Schutzschaltung auch bei niedrigen Gleichspannungen möglich ist.

Ferner ist aus der DE-AS 1 086 322 ein elektrischer Hochspannungsschalter bekannt, bei dem ein axial beweglicher stiftförmiger Schaltkontakt und zwei mit diesem zusammenarbeitende feste Kontakte vorgesehen sind. Sowohl der Schaltkontakt als auch die festen Kontakte sind in einem Schaltraum angeordnet, der von einem doppelwandigen Mantel umgeben ist. Hierdurch ist sichergestellt, daß aufgrund der metallischen Beschaffenheit der Außenwandung des Schaltraums jedenfalls Teile mit großer Feldstärke außerhalb des Schaltraums liegen. Beziehungen zu einem mit Niederspannung arbeitenden Batterietrennschalter sind nicht vorhanden.

Es ist ferner bekannt, bei einer Entladeschutzschaltung für den Stromspeicher in einem Kraftfahrzeug (DE 40 40 405 A1) einen Selbsthaltestromkreis vorzusehen, der beim Abstellen des Fahrzeugs wirksam wird und dann noch eingeschaltete Verbraucher aufgrund der Betätigung einer elektrischen Trennschalteinrichtung vom Stromspeicher sicher elektrisch abtrennt.

Ferner ist es bei einer Einrichtung zur Absicherung eines Hauptstrompfades in einem Verkehrsmittel bekannt (DE 41 10 240 C1), ein elektronisch ansteuerbares, batterienah untergebrachtes Abschaltmittel zur kontrollierten Herbeiführung einer Trennung zwischen Hauptstrompfad und Batterie anzuordnen, sobald ein eine Kurzschlußsituation charakterisierender Strom erfaßt wird. Das Abschaltmittel kann beispielsweise ein elektromagnetischer Aktuator oder auch eine Sprengkapsel sein.

Der Erfindung liegt die Aufgabe zugrunde, einmal dafür zu sorgen, daß ein aus einer Vielzahl von Gründen durchzuführendes Abschalten, also eine Trennung der Batterie vom Bordnetz schnell und problemlos möglich ist, wobei zur Vermeidung einer Tiefentladung der Batterie auch das die Umschaltung vornehmende Organ selbst vom Bordnetz getrennt wird, andererseits aber sicherzustellen, daß die Inbetriebnahme des Fahrzeugs, also die Zuschaltung der Batterie am Bordnetz ohne größeren Aufwand und Montage jederzeit wieder möglich ist.

Diese Aufgabe wird bei dem eingangs genannten Verfahren durch die Merkmale des Anspruchs 1 gelöst, wobei sich der Vorteil ergibt, daß eine einheitliche Einrichtung sowohl für die Abtrennung der Batterie vom Bordnetz im Falle eines Transports, einer längeren Stillegung des Fahrzeugs oder auch eines Unfalls, vorzugsweise automatisch, sorgt, als auch sicherstellt, daß bei vollkommen stromlosem Kraftfahrzeug zunächst die Bestromung der durch ihre eigene vorhergehende Trennmaßnahme ebenfalls von der Stromversorgung abgeschnittene Sicherheitseinrichtung dadurch wieder hergestellt wird, daß eine Bedienungsperson eine der Fahrzeugtüren öffnet.

Hierdurch schließen sich über entsprechende Türkontakte Stromversorgungsleitungen zur Sicherheitseinrichtung, und diese kann über den von ihr angesteuerten motorischen Antrieb für den Batterietrennschalter dann das gesamte Bordnetz wieder mit der Batterie verbinden.

Diese Verbindung erfolgt jedenfalls immer dann, wenn keine sonstigen inhibierenden Signale mehr vorliegen.

Es ist daher möglich, der Sicherheitseinrichtung, bestehend aus mehrstufigem, motorisch angetriebenem Batterietrennschalter, Schaltlogik und zugeordneter Sensorik, eine Vielzahl von wesentlichen Aufgaben zuzuweisen, d.h. die von einem solchen mehrstufigen Trennschalter gebotenen Sicherheitsmöglichkeiten optimal zu nutzen und gleichzeitig für den Fahrzeugbenutzer einen hohen Bedienungskomfort bereitzustellen.

Vorteilhaft ist ferner die Anordnung eines Starthilfestützpunkts im Bereich des Hochstrom-Trennschalters, der als Motorschalter Teil der Sicherheitseinrichtung ist. Der Starthilfestützpunkt kann z.B. mit dem Pluspol einer Hilfsbatterie, beispielsweise über ein Starthilfekabel, oder auch mit einer sonstigen, einen entsprechend hohen Anlaßstrom liefernden Starthilfeeinrichtung, beispielsweise einer mit Netzwechselspannung gespeisten, fahrbaren Gleichrichterschaltung, verbunden werden oder kann selbst der Starthilfe für ein Fremdfahrzeug dienen.

Vorteilhaft ist ferner, daß für die jeweils stattfindenden Schaltvorgänge keine Relais eingesetzt werden, die für die hier im Extremfall auftretenden Ströme, bei einem Anlaßvorgang vom Fremdstartstützpunkt ausgehend beispielsweise unter Umständen mehrere 100 A, ungeeignet sind. Für das Verbinden der verschiedenen Anschlüsse, nämlich Bordnetz, Batterie, Starthilfestützpunkt, unfallgefährdete Verbraucher auf einem Kontaktträger ist eine verschiebbare Kontaktbrücke vorgesehen. Der Antrieb der Kontaktbrücke erfolgt durch elektrische Stellmittel, beispielsweise durch motorische Verstellung, es können aber auch hydraulische oder elektromagnetische Antriebsmittel vorgesehen sein.

Weitere Vorteile und Merkmale der Erfindung werden im Zusammenhang mit der Zeichnung näher erläutert bzw. sind als Ausgestaltungen und Weiterbildungen Gegenstand der Merkmale der Unteransprüche.

Die Zeichnung zeigt in
- Fig. 1: schematisiert eine Gesamtdarstellung einer Fahrzeugstruktur mit Verbrauchern, und Batterie sowie in herausgezogener vergrößerter Darstellung einen motorischen Trennschalter mit Schaltlogik und peripheren Zusatzgeräten
- Fig. 2: schematisch ein mögliches Ausführungsbeispiel eines Batterietrennschalters im AnschlußKontaktbereich sowie mögliche Umschaltvarianten des Trennschalters
- Fig. 3: anhand von Flußdiagrammen Schaltungsabläufe im Bereich der den Trennschalter ansteuernden Schaltlogik.

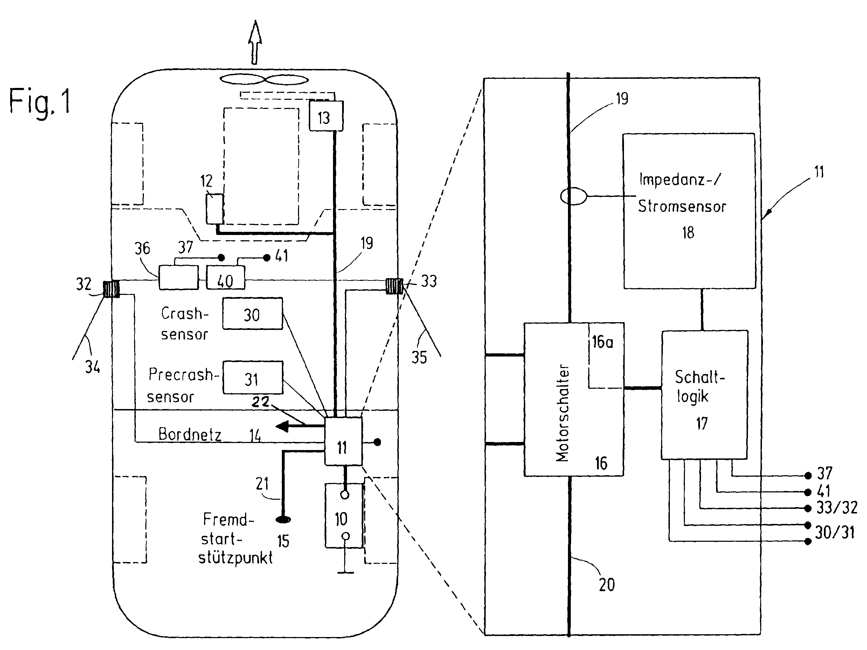

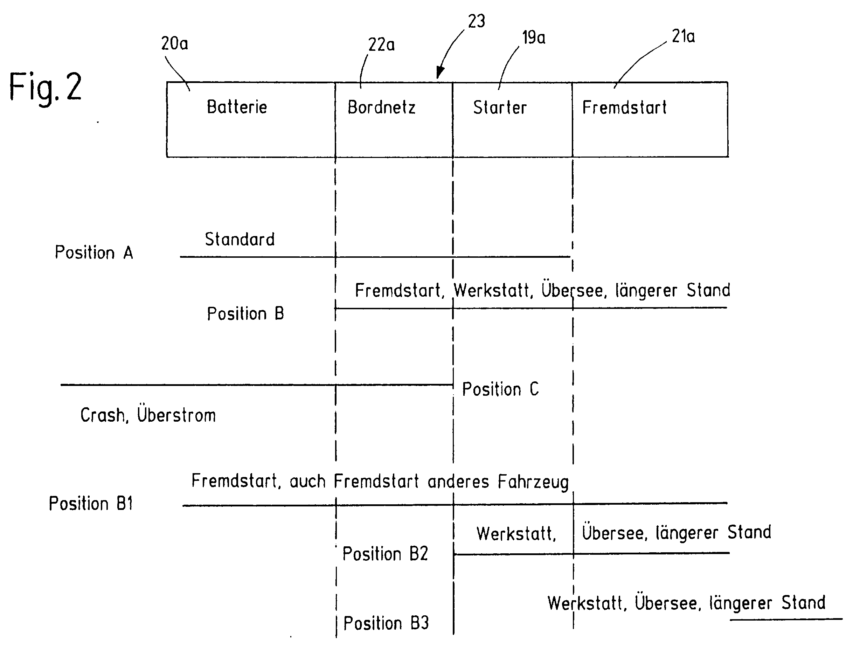

Die in ovaler Umrandung gezeigte Fahrzeugstruktur der Fig. 1 läßt eine Batterie 10 und eine mit der Batterie verbundene Sicherheitseinrichtung 11 erkennen. Die Sicherheitseinrichtung 11 ist über einen Verbindungsanschluß 20 mit der Batterie, über einen Verbindungsanschluß 21 mit einem Fremdstartstützpunkt 15, über einen Verbindungsanschluß 19 mit solchen elektrischen Fahrzeugkomponenten verbunden, die in einem unfall- oder crash-gefährdeten Bereich des Fahrzeugs liegen, wie beispielsweise Generator 13 und Anlasser 12, und über einen Verbindungsanschluß 22 mit dem Bordnetz 14 verbunden. Bei diesen Verbindungsanschlüssen handelt es sich sämtlich um Hochstromanschlüsse, die (s. Fig. 2) direkt mit den entsprechenden Kontaktbelegungen 19a für crash-gefährdete Komponenten, 20a für die Batterie, 21a für den Fremdstartstützpunkt und 22a für das Bordnetz des Batterie-Trennschalters verbunden sind, der in Fig. 1 als Motorschalter 16 zusammen mit zugeordneter Schaltlogik 17 und Impedanz-/Stromsensor 18 in der separat herausgezeichneten Umrandung der Sicherheitseinrichtung dargestellt ist.

Innerhalb der Fahrzeugstruktur sind noch erkennbar ein sogenannter Precrash-Sensor 31, ein Crash-Sensor 30 sowie Türöffnungsschalter 32, 33, die sämtlich über entsprechende Signalleitungen mit Sensoreingängen der Schaltlogik 17 verbunden sind, wie Fig. 1, rechte Seite erkennen läßt.

Ferner ist in der Fahrzeugstruktur der Fig. 1 eine Eingabeanordnung 40 zur manuellen Eingabe von Steuerbefehlen für die Schaltlogik 17 vorgesehen, die mit einem Anschluß 41 zur Schaltlogik geführt ist, sowie das Zündschloß 36 mit einem Anschluß 37.

Entsprechend Fig. 2 sind die mit den weiter vorn erwähnten Komponenten verbundenen Schalterkontakte oder Kontaktbelegungen 19a, 20a, 21a und 22a des Motorschalters 16 Teil eines beispielsweise und bevorzugt rohrförmigen Kontaktträgers 23, dessen einzelne Schalterkontakte über eine, nicht dargestellte, motorisch verschiebbare Kontaktbrücke des daher insgesamt als Motorschalter 16 arbeitenden Batterietrennschalters in im Grunde beliebiger Weise miteinander verschaltet werden können. Einige der möglichen Schaltverbindungen sind in Fig. 2 unterhalb des Kontaktträgers 23 in Form von dick durchgezogenen Linien dargestellt, wobei die einzelnen Positionen A, B, C, B1, B2, B3 auf von der Kontaktbrücke realisierte möglichen Schaltverbindungen hinweisen, in Verbindung mit der entsprechenden Beschriftung.

Die Ausgangsschaltposition der Schaltlogik 17, die diese bei vorhandener eigener Spannungsversorgung dann einnimmt, wenn keine anderslautenden Befehle an ihren Eingängen vorliegen, oder sonstige Signale, die eine unterschiedliche Reaktion erforderlich machen, entspricht der Position A (Standard)in Fig. 2, d.h. die Schaltlogik steuert ein entsprechendes motorisches Stellglied 16a für den Motorschalter 16 als Batterietrennschalter so an, daß die Batterie mit dem Bordnetz sowie mit den in einem möglichen crashgefährdeten Bereich des Fahrzeugs angeordneten weiteren elektrischen Komponenten (Starter) verbunden ist.

Aus dieser Standardposition können sich dann beispielsweise die folgenden Umschaltmöglichkeiten ergeben.

### Manuelles Abtrennen der Batterie

Ein solches manuelles Abtrennen der Batterie erfolgt beispielsweise durch Befehlseingabe einer Bedienungsperson über eine entsprechende Eingabeeinheit 40 bei vorauszusehendem längerem Stillstand des Fahrzeugs, etwa beim Verschiffen oder auch bei der Produktion, während eines Werkstattaufenthalts u.dgl.

Das Öffnen des Batterietrennschalters entsprechend Abtrennung der Batterie vom Bordnetz und vom Starter/-Generatorkreis (Position B in Fig. 2, eventuell auch Unterposition B2 oder B3) kann über ein Menü beispielsweise in einem Kombiinstrument des Fahrzeugs erfolgen. Der Menüpunkt sollte mindestens auf einer niedrigen Bedienebene liegen und beispielsweise nur über einen Code zugänglich sein.

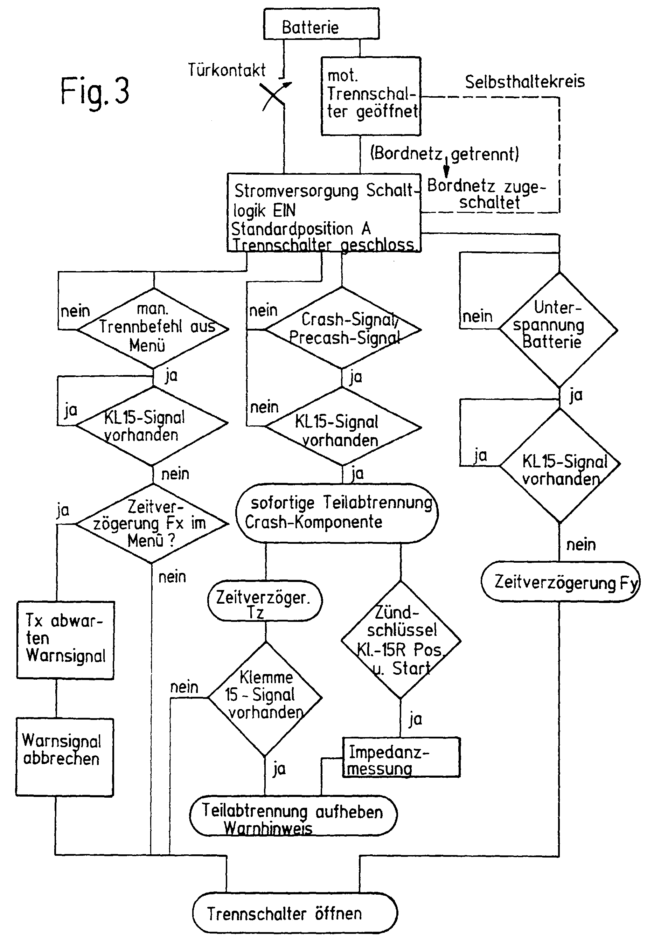

Entsprechend der Darstellung der Fig. 3, linke Spalte wird als Sicherheit gegen ein unbeabsichtigtes Öffnen während des Betriebs des Fahrzeugs ein Fahrzeugbetriebssignal verwendet, beispielsweise kann ein an Klemme 15 oder Klemme 15R des Zündschlosses 36, welches im folgenden als repräsentativ für den bestehenden Betrieb des Fahrzeugs angesehen und als Klemme15-Signal bezeichnet wird, benutzt werden. Die Schaltlogik 17 trennt die Batterie nur dann ab, wenn das Klemme15-Signal nicht vorliegt.

Dabei kann das Abschalten der Batterie sowohl sofort erfolgen, beispielsweise bei der Produktion oder bei einem Werkstattaufenthalt, wobei ein entsprechender Menüpunkt angefahren wird, oder auch über eine Zeitverzögerung, die etwa bei einem Schiffstransport erwünscht ist. Die zeitverzögerte Abschaltung Tx erfolgt mit einer Zeitkonstanten beispielsweise zwischen 30 Sekunden und 2 Minuten, wobei, um das zeitverzögerte Ausschalten kenntlich zu machen, während dieser Zeitverzögerung ein akustisches oder optisches Warnsignal ausgelöst wird. Dieses Alarmsignal erlischt mit dem erfolgten Abtrennen der Batterie. Somit ist auf der einen Seite für den Bediener eine Rückmeldung gegeben, daß die Funktion ausgelöst wurde. Weiterhin besteht für die Bedienungsperson die Möglichkeit, das Fahrzeug während dieser Zeit zu verlassen, und schließlich bekommt man durch die Beendigung der Warnmeldung eine eindeutige Information darüber, daß die Batterie tatsächlich abgetrennt worden ist. Da die Beschriftungen in den Blöcken der Flußdiagramme der Fig. 3 für sich selbst sprechen, braucht auf diese nicht nochmals gesondert eingegangen werden.

Es ist möglich, in der Produktion bzw. vor dem Verschiffen des Fahrzeugs das Untermenü, aus welchem der Abtrennbefehl aufgerufen werden kann, auch als Standard (default) zu setzen, so daß für das Aufrufen des Menüpunktes keine Zeit verloren geht. Weiterhin ist es möglich, den manuellen Trennbefehl im Werk schon aufzurufen (d.h. dauerhaft einzustellen) und bei Abfall der Klemme 15 mit einer Zeitverzögerung den Schalter zu öffnen. Nach Beendigung des Transportvorganges wird dieser Modus dann wieder aufgehoben.

Da es ein angestrebtes Ziel ist, durch das Abtrennen der Batterie vom Bordnetz die Batterie ohne sie weiter belastende Verbraucher zu schalten, wird hierdurch notwendigerweise auch die den Motorschalter 16 steuernde Schaltlogik 17, die ja mit dem Bordnetz verbunden ist, von der Batterie getrennt. Jedenfalls ist dies die sinnvollste Möglichkeit und daher ein bevorzugtes Merkmal. Um das Fahrzeug jedoch ohne größere Montagearbeiten wieder in Betrieb setzen zu können, wird so vorgegangen, daß durch spezielle Türkontakte 32, 33, die beim Öffnen der Türen 34, 35 ansprechen, der Batterietrennschalter wieder geschlossen, also mit Bordnetz und Starterbereich verbunden wird.

Dies ist auch deshalb sinnvoll, weil beim Überseetransport der Schlüssel in der Regel im Zündschloß verbleibt und somit das Einstecken des Schlüssels nicht als Signal zum Schließen des Batterietrennschalters verwendet werden kann, wozu ohnehin eine gesonderte Kontaktstelle notwendig wäre, da das Bordnetz voraussetzungsgemäß stromlos ist.

Bei Verwenden von Türkontakten ist es sinnvoll, daß diese primär lediglich die Schaltlogik und den Motorschalter über gesonderte, mit der Batterie verbundene Zuleitungen mit Spannung versorgen, woraufhin dann die Schaltlogik unter der Voraussetzung, daß keine sonstigen ein Anschließen der Batterie verhindernden Betriebszustände vorliegen, die Position A (Standard) wieder herstellt. Während der Zeit, in welcher eine Tür geöffnet ist, muß daher die Batterie über die Schaltlogik 17 wieder mit dem Bordnetz verbunden werden, was aufgrund des unmittelbaren Ansprechens der Schaltlogik 17 auch bei nur sehr kurzzeitiger Türöffnung problemlos möglich ist.

### Abtrennen der Batterie bei Unterspannung

Für den Fall, daß ein Fahrzeug über längere Zeit hinweg abgestellt wird, sollte die Batterie auch dann von ihren Verbrauchern getrennt werden, wenn der Benutzer selbst die ihm, z.B. über das Menü, gebotene Möglichkeit der Abschaltung nicht wahrnimmt oder nicht erkennt, daß bei eventuell ohnehin schon geschwächter Batterie auch ein nicht allzu langes Abstellen aufgrund vorhandener Ruheströme zu einer völligen Erschöpfung der Batterie führen kann. Zum Erhalt der Startfähigkeit und dem Schutz der Batterie muß diese daher auch automatisch vom Bordnetz getrennt werden können, wobei eine sichere Abschaltung nur dann wiederum gewährleistet ist, wenn das Fahrzeug nicht im Betrieb ist. Entsprechend dem Schaltungsablauf in der rechten Spalte der Fig. 3 ergeht daher ein Abschaltbefehl der Schaltlogik immer dann, wenn diese über entsprechende Sensoren, von denen auch einer mit der Batterie 10 verbunden ist, eine Unterspannung der Batterie feststellt. Die automatische Abschaltung wird jedoch nur dann zugelassen, wenn kein Klemme15-Signal vorhanden ist, das Fahrzeug also nicht im Betrieb ist. Ferner wird eine Verzögerungszeit für die Abschaltung in Betracht gezogen, die beispielsweise mindestens 10 Minuten betragen sollte. Für diese Zeit muß eine Unterspannung bei fehlendem Klemme15- bzw. Klemme15R-Signal anliegen. Ist dies der Fall, so trennt die Schaltlogik 17 die Batterie automatisch vom Bordnetz 14, darin eingeschlossen den Starterbereich, so daß der Trennschalter entsprechend Fig. 2 bevorzugt in die Position B3 überführt wird.

Die genannte hohe Zeitkonstante von beispielsweise 10 Minuten wird auch dadurch gerechtfertigt, daß hierdurch kurzfristige Störungen, die durch eine Belastung der Batterie, beispielsweise Anlaßvorgang oder Aufwecken von CAN-Teilnehmern entstehen und die zu einem Absinken der Batteriespannung führen, ausgeblendet werden können.

Auch in diesem Falle erfolgt die Wiederinbetriebnahme des Fahrzeugs durch den Fahrer durch Öffnung einer Tür mit einem mechanischen Schlüssel, schon allein deshalb, weil auch eine eventuell vorhandene Zentralverriegelung ebenfalls nicht mit Strom versorgt wird. Auch in diesem Fall wird daher, wie weiter vorn schon anhand der manuellen Trennung erläutert, die Batterie mit Hilfe eines Türkontaktes 32, 33 wieder mit dem Bordnetz verbunden.

Ist dann, was vermutet werden kann, noch eine Unterspannung vorhanden, so hat der Fahrer den Zeitraum der erwähnten Abschaltzeitkonstante von <10 Minuten zur Verfügung, um den Motor anzulassen und somit ein Laden der Batterie zu erreichen. Nach dem Anlassen des Motors wird die Spannung durch den Generator ohnehin angehoben, und die Zeitkonstante spielt keine Rolle mehr, weil die Schaltlogik eine Batterieunterspannung nicht mehr wahrnehmen kann.

### Abtrennen der Batterie bei Auslösung durch Crash-Signal

Ein Abschalten der Batterie im Falle eines Precrash- oder Crash-Signals kann nur bei anliegendem Klemme 15/15R-Signal erfolgen. Hierbei wird jedoch - jedenfalls nicht in erster Linie - nicht die Batterie vom gesamten Bordnetz, sondern nur der Starter/Generatorkreis einschließlich der im crash-gefährdeten Bereich liegenden Verbraucher abgetrennt. In diesem Zustand ist das Fahrzeug noch fahrfähig, und alle sonstigen Sicherheitseinrichtungen sind noch voll funktionsfähig.

Da es bei einem längeren Betrieb des Fahrzeugs in diesem Zustand zu Schäden kommen kann, beispielsweise Überhitzung des Verbrennungsmotors, wenn ein elektrisch angetriebener Ventilator mit abgeschaltet ist, wird die Teilabtrennung der crash-gefährdeten Komponenten für den Fall, daß das Fahrzeug über einen festgelegten Verzögerungszeitraum Tz im Betrieb bleibt, automatisch wieder aufgehoben und gegebenenfalls dem Fahrer ein Warnhinweis eingeblendet. Diese Aufhebung der Teilabtrennung setzt voraus, daß ein Klemme15-Signal weiterhin vorhanden ist. Es kann sich als sinnvoll erweisen, in einer Ausgestaltung der Erfindung bei einem fehlenden Klemme15-Signal, was auf Betriebsunfähigkeit des Fahrzeugs nach einem Crash hinweist, den Batterietrennschalter vollständig zu öffnen, also das gesamte Fahrzeug stromlos zu machen. Auch dies ist in der mittleren Spalte der Fig. 3 als Alternativlösung angegeben.

Möglich ist auch die Zuschaltung der teilabtrennenden Komponenten bei einem nur geringen Schaden (Crash-Signal gesendet) über das Zündschloß, indem der Fahrer den Schlüssel zunächst in die Ausgangsposition bringt und anschließend der Verbrennungsmotor gestartet wird. In diesem Falle empfiehlt es sich, über den Impedanzsensor 18 eine Impedanzmessung durchzuführen, um festzustellen, ob Schäden an den Leitungen (Leitung 19) vorliegen, und nur falls diese Messung keine Schäden erkennen läßt, gestattet die Schaltlogik das Aufschalten der teilabgeschalteten Komponenten.

Eine Teilabschaltung erfolgt auf jeden Fall aber auch immer dann im Bereich crash-gefährdeter Komponenten, wenn über den Impedanz- oder Stromsensor 18 in der Verbindungsleitung 19 zu diesen Komponenten ein überhöhter Strom, der auf einen Kurzschluß hindeutet, gemessen wird.

Es ist auch möglich, im Fall einer Fehlauslösung, beispielsweise hat der Precrash-Sensor 31 ausgelöst, es kommt aber vom Crash-Sensor 30 kein Crash-Signal, die Zuschaltung nach einer Impedanzmessung über eine Zeitkonstante vorzunehmen.

### Batterie abtrennen und zuschalten bei Fremdstart

Die Schaltlogik 17 erfaßt ferner über einen Sensor 15 das Potential am in der Standardposition A normalerweise nicht mit den restlichen Fahrzeugkomponenten verbundenen Fremdstartstützpunkt 15. Ergibt sich an diesem Fremdstartstützpunkt 15 ein Potential, welches positiver oder zumindest gleich dem Potential am Batteriepluspol ist, dann wird der Fremdstartstützpunkt 15 vorzugsweise automatisch mindestens mit dem Starter/Generatorkreis verbunden, d.h. der Trennschalter wird in die entsprechende Position B2 der Fig. 2 überführt. Es ist aber auch eine Umschaltung des Batterietrennschalters in die Position B und schließlich auch in die Position B1 der Fig. 2 möglich, wobei in der Position B lediglich die fahrzeugeigene Batterie nicht mit angeschlossen ist, da sie bei einer eventuellen Tiefentladung auch die Fremdstarthilfe unter Umständen zu stark belasten könnte, während in der Position B1 die fahrzeugeigene Batterie bei einem Fremdstart gegebenenfalls noch mithelfen kann oder schließlich auch in dieser Position der Fremdstart eines fremden Fahrzeugs vorgenommen wird, indem von dem nunmehr mit der Fahrzeugbatterie verbundenen Fremdstartstützpunkt 15 eine Verbindung zu einem fremden Fahrzeug vorgenommen wird.

Mißt die Schaltlogik 17 am Fremdstartstützpunkt 15 demgegenüber ein negatives Signal, dann liegt eine Verpolung vor, und die Verbindung (Überführung in die Positionen B, B1 bzw. B2) wird nicht hergestellt. Hierdurch ist ein sicherer Verpolungsschutz gewährleistet.

Ob man die Möglichkeit der Position B1 (Parallelschaltung der Fremdbatterie zur eigenen Fahrzeugbatterie) oder die Position B wählt, um die Fremdbatterie weniger zu belasten, kann durch freie Wahl im Menü durch die Bedienungsperson festgelegt werden, oder es ist von vornherein in der Schaltlogik 17 entsprechend programmiert.

Startet die Brennkraftmaschine, dann wird über die Schaltlogik 17 der Kontakt zum Fremdstartstützpunkt 15 automatisch wieder aufgetrennt, falls der Stromfluß vom Fremdfahrzeug zum eigenen Fahrzeug vorlag, wozu der Stromfluß vom Generator, der ja über den Stromsensor 18 in der Leitung 19 erfaßt wird, in die eigene bzw. in die Fremdbatterie oder ein "Motor läuft"-Signal benutzt werden kann.

Es ist auch möglich, den Spannungspegel in den Leitungen 19 bzw. 20 gegenüber der Spannung am Fremdstartstützpunkt 15 auszuwerten. Ist deren Spannungspegel mindestens gleich hoch, so wird der Fremdstartstützpunkt 15 abgetrennt und die Batterie 10 mit Starter und Bordnetz verbunden.

Um dem Fremdstartstützpunkt immer ein definiertes Potential zuordnen zu können, was für die Sensorik von Vorteil ist, wird bevorzugt der Fremdstartstützpunkt über einen hochohmigen Widerstand (pull down-Widerstand) mit Masse verbunden, so daß Spannungsänderungen am Fremdstartstützpunkt 15 definiert ausgewertet werden können.

Eine automatische Umschaltung über die Schaltlogik 17 ist auch für den Fall möglich, daß einem Fremdfahrzeug Starthilfe gegeben wird. Hierzu wird die eigene Fahrzeugbatterie mit dem Fremdstartstützpunkt verbunden, d.h. der Batterietrennschalter wird in die Position B1 der Fig. 2 überführt. Für diesen Fall wird wiederum die Spannung zwischen der eigenen Fahrzeugbatterie 10 und einer in diesem Falle minimalen positiven Spannung (beispielsweise in der Größenordnung von 5 Volt) am Fremdstartstützpunkt 15 ausgewertet, woraufhin die Verbindung hergestellt wird. Eine Auftrennung nach einer vorgegebenen Zeitverzögerung kann automatisch erfolgen. Besteht danach die Einschaltbedingung noch immer, dann wird die eigene Batterie wieder auf den Fremdstartstützpunkt 15 aufgeschaltet.

## Patentansprüche

1. Verfahren zum Betrieb einer einen mehrstufigen Hochstrom-Batterietrennschalter enthaltenden Sicherheitseinrichtung für Kraftfahrzeuge, wobei eine Abtrennung der Batterie vom Bordnetz durch Fahrzeugbetriebssignale verhindert wird, dadurch gekennzeichnet, daß zur Wiederinbetriebnahme des Fahrzeugs Türkontaktschalter betätigt werden und einer, den Batterietrennschalter motorisch betätigenden Schaltlogik (17) Batteriestrom zuführen, derart, daß diese den Batterietrennschalter in eine das Bordnetz mit der Batterie verbindende Standardposition (A) überführt.

2. Verfahren nach Anspruch 1, dadurch gekennzeichnet, daß die manuelle Abtrennung der Batterie vom Bordnetz durch Betätigung einer Eingabeschaltung für die Schaltlogik (17) erfolgt, wobei eine Abtrennung der Batterie so lange verhindert wird, wie ein Fahrzeugbetriebssignal in Form eines Klemme15- bzw. Klemme15R-Signals vorliegt.

3. Verfahren nach Anspruch 2, dadurch gekennzeichnet, daß die Batterieabtrennung nach manueller Befehlsgabe an die Schaltlogik zeitverzögert bei gleichzeitiger Abgabe eines im Moment der vollzogenen Abtrennung erlöschenden Warnsignals erfolgt.

4. Verfahren nach einem der Ansprüche 1 bis 3, dadurch gekennzeichnet, daß eine automatische Abtrennung der Batterie von sämtlichen Stromverbrauchern des Bordnetzes von der Schaltlogik (17) im Falle einer Unterspannung nur bei fehlendem Fahrzeugbetriebssignal (Klemme15-Signal) erfolgt, bei gleichzeitiger Berücksichtigung einer vorgegebenen Verzögerungszeit derart, daß kurzfristige Belastungsstörungen der Batterie ausgeblendet und die durch die Verzögerungszeit vorgegebene Abschaltzeitkonstante bei der erneuten Inbetriebnahme eine Zeitvorgabe für das Anlassen des Motors zur Verfügung stellt.

5. Verfahren nach einem der Ansprüche 1 bis 4, dadurch gekennzeichnet, daß eine automatische Abtrennung mindestens von in einem crash-gefährdeten Bereich liegenden elektrischen Komponenten (Starter-/Generatorkreis) durch die Schaltlogik (17) bei gleichzeitigem Vorliegen eines Precrash- bzw. Crash-Signals nur bei vorhandenem Fahrzeugbetriebssignal (Klemme15/15R-Signal) erfolgt und die Abtrennung der crash-empfindlichen Komponenten automatisch dann rückgängig gemacht wird, wenn über eine vorgegebene Verzögerungszeit hinaus Fahrzeugbetriebssignale der Schaltlogik (17) zugeführt werden.

6. Verfahren nach Anspruch 5, dadurch gekennzeichnet, daß bei lediglicher Teilabschaltung crashempfindlicher elektrischer Komponenten des Fahrzeugs deren Zuschaltung durch Betätigung des Zündschlosses erfolgt, wobei zeitlich vorgehend eine Impedanzmessung im crash-empfindlichen Komponentenbereich vorgenommen wird und diese keinen Fehlerfall anzeigt.

7. Verfahren nach Anspruch 6, dadurch gekennzeichnet, daß die Zuschaltung der teilabgeschalteten crashempfindlichen Komponenten nach der Impedanzmessung über eine Zeitverzögerung erfolgt.

8. Verfahren nach einem der Ansprüche 1 bis 7, dadurch gekennzeichnet, daß eine Verbindung eines Fremdstartstützpunktes (15) mindestens mit Bordnetz und Starter/Generatorbereich über die Schaltlogik (17) dann selbsttätig vorgenommen wird, wenn die Spannung am Fremdstartstützpunkt (15) größer als die fahrzeugeigene Batteriespannung ist.

9. Verfahren nach Anspruch 8, dadurch gekennzeichnet, daß die Verbindung von Bordnetz und/oder StarterGeneratorbereich zum Fremdstartstützpunkt (15) dann aufgehoben wird, wenn ein vom fahrzeugeigenen Generator ausgehender Stromfluß erfaßt oder der Spannungspegel im fahrzeugeigenen Netz über dem des Fremdstartstützpunktes liegt oder ein Motor-läuft-Signal zugeführt wird.

10. Verfahren nach einem der Ansprüche 1 bis 9, dadurch gekennzeichnet, daß der Fremdstartstützpunkt (15) von der Schaltlogik (17) zur FremdfahrzeugStarthilfe dann mit der Fahrzeugbatterie verbunden wird, wenn die Spannung am Fremdstartstützpunkt (15) einer niedrigen positiven Spannung (5 Volt) entspricht, mit Rückführung des Trennschalters in die Position A (Standard) nach einer vorgegebenen Zeitverzögerung.

11. Verfahren nach Anspruch 9 oder 10, dadurch gekennzeichnet, daß dem Fremdstartstützpunkt (15) über einen hochohmigen pull down-Widerstand ein definiertes Potential verliehen wird.
